# EUROPEAN PATENT APPLICATION

(11) **EP 4 079 186 A1**
(43) Date of publication of application: **26.10.2022**
(21) Application number: 21196381.4
(22) Date of filing: 13.09.2021
(51) Int. Cl.: A45D 20/16, A01K 13/00, A47K 10/48

(54) **MULTIPURPOSE DRYER**

(30) Priority: 22.04.2021 KR 20210052492
(71) Applicant: IM Co., Ltd., Iksan-si, Jeollabuk-do 54630 (KR)
(72) Inventor: SUNG, Yeol Gyu, 54544 Iksan-si, Jeollabuk-do (KR); KIM, Young Se, 06246 Gangnam-gu, Seoul (KR)
(74) Representative: Cabinet Chaillot

(57) **Abstract**

The present disclosure relates to a multipurpose dryer which allows free use of both hands during drying by adjusting the direction of a nozzle, and can freely move the nozzle to a desired part of an object to be dried as necessary during drying, and the multipurpose dryer includes a body part including a blower means inside to suck outdoor air, heat or cool it and force the heated or cooled air, and a manipulation panel outside to control the blower means, a hose part including a first hose capable of freely bending and maintaining a deformed shape with one end coupled to the body part and the other end formed as a free end, and a second hose capable of freely bending and positioned inside the first hose, with one end coupled to the blower means and the other end formed as a free end at the other end of the first hose, and a nozzle part coupled to the other end of the second hose to spray the hot or cold air supplied from the blower means.

## Description

### [Technical Field]

The present disclosure relates to a multipurpose dryer, and more particularly, to a multipurpose dryer which allows free use of both hands during drying by adjusting the direction of a nozzle, and can freely move the nozzle to a desired part of an object to be dried as necessary.

### [Background Art]

In general, a dryer is a device used to remove moisture from an object and is designed to suck the outdoor air, heat or cool it and blows the heated or cooled air to the object to be dried.

Most of dryers include a body including a handle that a user holds and a nozzle to force hot or cold air to dry out, and a blower means formed in the body to suck the outdoor air, cool or heat it and feed the cooled or heated air to the nozzle, and in general, the user holds the handle, operates the blower means and positions the nozzle toward an object to be dried.

Accordingly, while the user is using the dryer, he/she has to keep holding the handle with one hand, and thus cannot have both hands free.

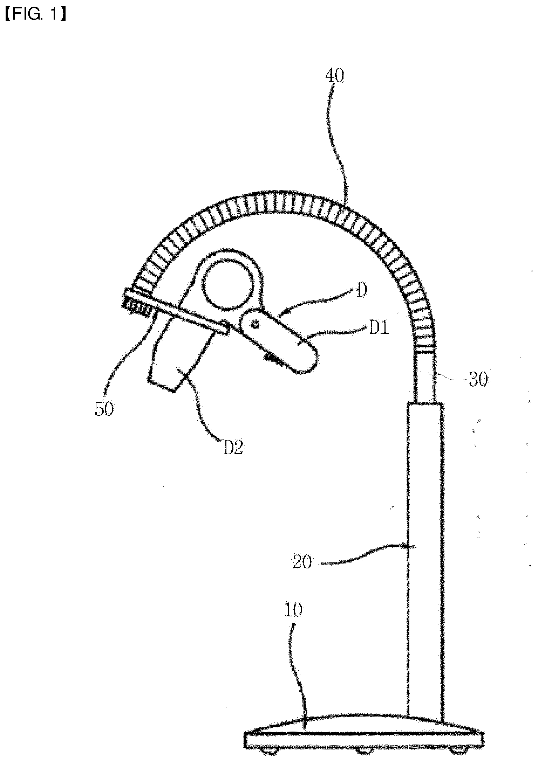

To solve this problem, as shown in FIG. 1, Korean Utility Model No. 20-0346022 discloses a dryer stand including a base 10 stably placed on the floor or a table, a fixed support 20 vertically installed on the upper side of the base 10, a height adjustment support 30 inserted and installed on top of the fixed support 20 to adjust the height upwards/downwards, a flexible support 40 having a corrugated tube structure that can freely bend, extending from and connected to the top of the height adjustment support 30, and a dryer holder 50 attached to a free end of the flexible support 40 and having a holder opening into which a body of a dryer D is inserted downwards to allow the dryer D to blow air in a vertically downward direction or a slanted downward direction.

The dryer stand allows free use of both hands during drying since the user does not need to hold the handle D1 of the dryer D, but is not easy to adjust the position of the height adjustment support 30 and the flexible support 40 during drying when adjustment of the direction and position of the nozzle D2 is completed.

Accordingly, to dry a moving object such as a pet, the user has to lift the object to be dried toward the nozzle D2 of the dryer D or position a desired part of the object toward the nozzle, which places limitations on the use of both hands.

### [RELATED LITERATURES]

### [Patent Literatures]

Korean Utility Model No. 20-0346022 (published on March 26, 2004)

### [Disclosure]

### [Technical Problem]

The present disclosure is designed to solve the above-described problem, and therefore the present disclosure is directed to providing a multipurpose dryer which allows free use of both hands during drying by adjusting the direction of a nozzle, and can freely move the nozzle to a desired part of an object to be dried as necessary during drying.

The objects of the present disclosure are not limited to the above-mentioned object, and other objects and advantages of the present disclosure not mentioned herein will be understood by the following description and apparent from the embodiments of the present disclosure.

Additionally, it will be easily understood that the objects and advantages of the present disclosure can be realized by the means set forth in the appended claims and a combination thereof.

### [Technical Solution]

To solve the above-described problem, a multipurpose dryer according to the present disclosure includes a body part including a blower means inside to suck outdoor air, heat or cool it and force the heated or cooled air, and a manipulation panel outside to control the blower means, a hose part including a first hose capable of freely bending and maintaining a deformed shape with one end coupled to the body part and the other end formed as a free end, and a second hose capable of freely bending and positioned inside the first hose, with one end coupled to the blower means and the other end formed as a free end at the other end of the first hose, and a nozzle part coupled to the other end of the second hose to spray the hot or cold air supplied from the blower means.

More specifically, a nozzle coupling bracket is formed at the other end of the first hose, and the nozzle part includes a hose coupling bracket at one end and a nozzle at the other end to spray the hot or cold air supplied from the blower means, wherein the hose coupling bracket is attached and detached to/from the nozzle coupling bracket.

In the same way as the first hose, the second hose may be capable of maintaining a deformed shape.

Additionally, each of the first hose and the second hose is a compressible and stretchable corrugated tube, and preferably, a maximum stretched length of the second hose is at least 1.5 times larger than a maximum stretched length of the first hose.

Additionally, the body may have a suction port formed on any one side to feed the outdoor air toward the blower means, and the suction port may include a detachable filter.

### [Advantageous Effects]

As described above, the multipurpose dryer according to the present disclosure allows free use of both hands during drying by adjusting the direction of the nozzle, and can freely move the nozzle to a desired part of an object to be dried as necessary during drying, thereby easily performing a drying task for a moving object such as a pet.

Along with the above-described effects, the effects of the present disclosure will be described in detail with the detailed description for carrying out the present disclosure.

### [Description of Drawings]

FIG. 1 is a side view showing the conventional dryer stand while in use.
FIG. 2 is a perspective view showing the appearance of a multipurpose dryer according to an embodiment of the present disclosure.
FIG. 3 is a diagram showing a multipurpose dryer according to an embodiment of the present disclosure while in use.
FIGS. 4A and 4B are diagrams detailing a nozzle coupling part and a hose coupling part of a multipurpose dryer according to an embodiment of the present disclosure, respectively.
FIGS. 5A and 5B are diagrams, each showing a multipurpose dryer according to an embodiment of the present disclosure while in use.

### [Best Mode]

The above-described objects, features and advantages will be described in detail with reference to the accompanying drawings, and accordingly, those having ordinary skill in the technical field pertaining to the invention will easily carry out the technical spirit of the present disclosure.

In the description of the present disclosure, when it is determined that a detailed description of well-known technology related to the present disclosure may unnecessarily obscure the key subject matter of the present disclosure, the detailed description is omitted herein.

Hereinafter, the preferred embodiments according to the present disclosure will be described in detail with reference to the accompanying drawings. In the drawings, the same reference sign is used to indicate the same or similar element.

The term "on (or below)" or "above (or under)" when used in this specification, refers to being positioned on or below, but may specify that another element may be interposed between the element and any element positioned on (or below) the element.

Additionally, it should be understood that when an element is referred to as being "connected", "coupled" or "joined" to another element, it can be directly connected or joined to the other element, but "intervening" elements may be present or it may be "connected", "coupled" or "joined" to the other element through another element.

Unless the context clearly indicates otherwise, the singular forms as used herein include the plural forms as well.

It should be interpreted that the term "comprising" or "including" when used in this specification, specifies the presence of stated elements or steps, but does not preclude the presence or addition of other elements or steps.

Unless the context clearly indicates otherwise, "A and/or B" when used in this specification, specifies A, B or A and B, and unless the context clearly indicates otherwise "C to D" when used in this specification, specifies C or more and D or less.

Hereinafter, a multipurpose dryer according to some embodiments of the present disclosure will be described.

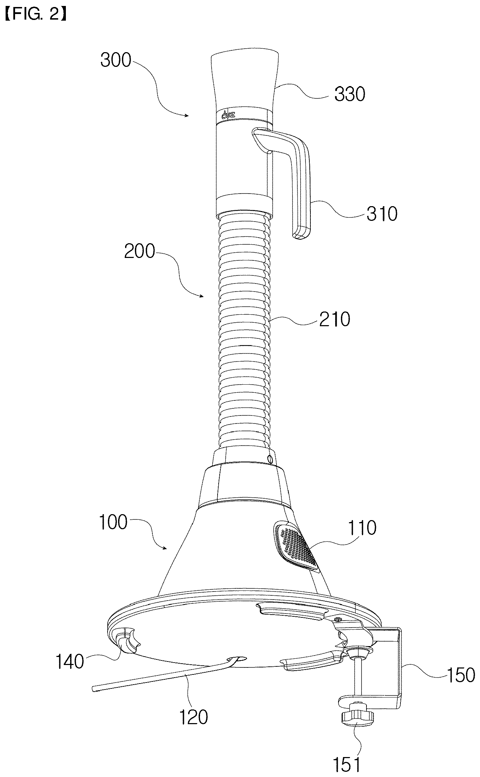

FIG. 2 is a perspective view showing the appearance of the multipurpose dryer according to an embodiment of the present disclosure.

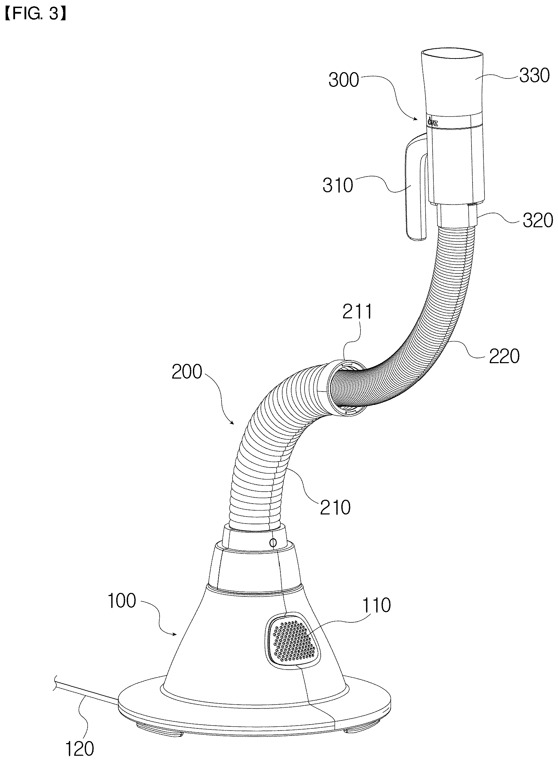

Additionally, FIG. 3 is a diagram showing the multipurpose dryer according to an embodiment of the present disclosure while in use.

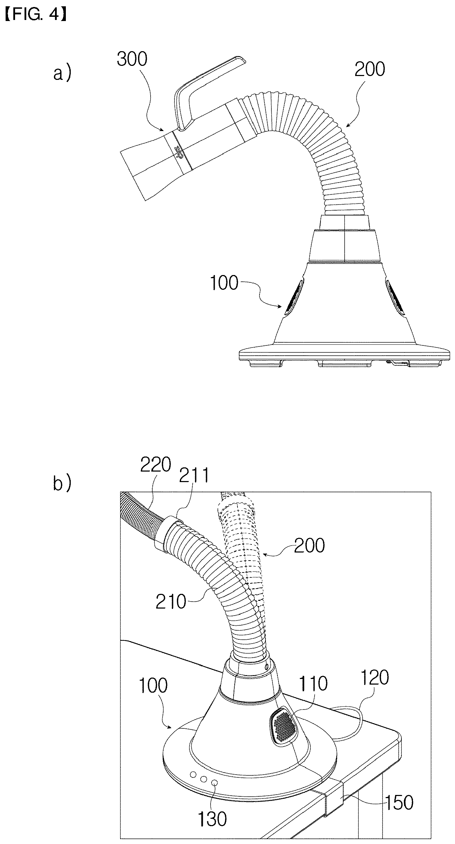

Additionally, FIGS. 4A and 4B are diagrams detailing a nozzle coupling part and a hose coupling part of the multipurpose dryer according to an embodiment of the present disclosure, respectively.

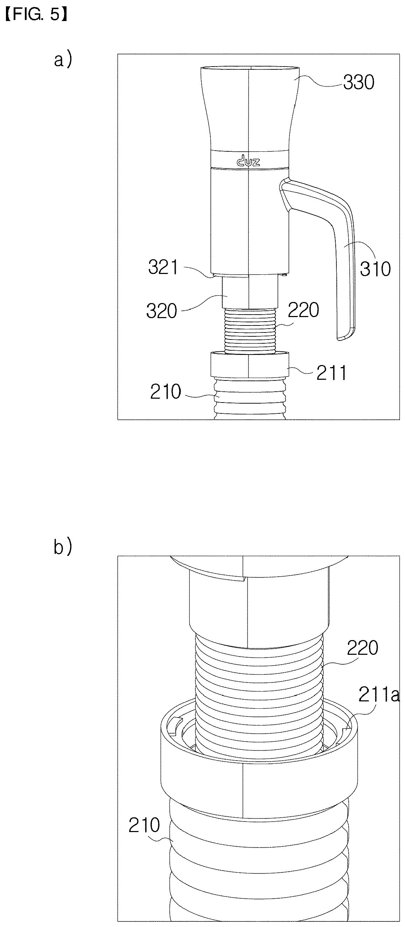

Additionally, FIGS. 5A and 5B are diagrams, each showing the multipurpose dryer according to an embodiment of the present disclosure while in use.

Referring to FIGS. 2 to 5, the multipurpose dryer according to the present disclosure includes a body part 100, a hose part 200 and a nozzle part 300.

More specifically, the body part 100 has a conic shape as a whole with the base having a relatively large diameter, and includes at least one suction port 110 on the side to suck the outdoor air, a blower means (not shown) including a motor and a fan, a heater and/or a cooler inside, and an exhaust port (not shown) on top, through which the heated or cooled air by the blower means is discharged.

In this instance, a detachable filter is formed at the suction port 110 to prevent impurities such as dust and insects in the outdoor air from entering the body part 100.

Additionally, the blower means may include a variety of well-known configurations, and its detailed description is omitted herein.

Additionally, the body part 100 further includes a battery (not shown) for supplying power to the blower means embedded therein or a power supply line 120 including a plug for connection to an external power source, and a touch or button type manipulation panel 130 to control the blower means.

In this instance, the power supply line 120 preferably extends outward from the bottom of the body part 100.

Additionally, the body part 100 may further include a plurality of nonslip pads 140 on the bottom and a fixing bracket 150 detachably attached to any one side.

In this instance, the nonslip pad 140 is formed higher than the power supply line 120, and is preferably made of rubber or synthetic resin similar to rubber to prevent the body part 100 from moving when the body part 100 is placed on the floor.

Additionally, the fixing bracket 150 may be formed in a letter ' 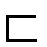 ' shape as a whole as shown in FIG. 4B and may include a clamp 151, and when the body part 100 is placed on a table, the length of the clamp 151 is adjusted by screwing to bring the clamp 151 and one surface of the table into close contact with each other in order to fix the body part 100 more firmly.

Meanwhile, the hose part 200 includes a first hose 210 and a second hose 220.

More specifically, the first hose 210 is a rigid duct hose which can freely bend and maintain the deformed shape, with one end formed on the side of the exhaust port and the other end formed as a free end.

Additionally, the first hose 210 is a corrugated tube type stretchable and compressible hose made of synthetic resin not to be deformed by hot air.

Additionally, a nozzle coupling bracket 211 is formed at the other end of the first hose 210, where the nozzle part 300 is attached and detached.

Additionally, the second hose 220 is formed inside the first hose 210 such that one end is connected to the exhaust port of the blower means and the other end is connected to the nozzle part 300.

Additionally, the second hose 220 is a rigid duct hose which can freely bend and maintain the deformed shape, and is a corrugated tube type stretchable and compressible hose.

Additionally, the second hose 220 is a channel through which hot or cold air from the blower means flows, and is preferably made of synthetic resin having resistance to deformation by the hot or cold air.

Additionally, since the second hose 220 is formed inside the first hose 210 as described above, the second hose 220 has a smaller diameter than the diameter of the first hose 210.

More preferably, the second hose 220 is more flexible than the first hose 210 and thus may be more likely to deform than the first hose 210.

Additionally, the second hose 220 may be so flexible that it cannot maintain the deformed shape.

Additionally, preferably, when compressed, the second hose 220 is equal to or similar to the compressed length of the first hose 210, and when stretched, the second hose 220 is at least 1.5 times longer than the maximum stretched length of the first hose 210.

Meanwhile, the nozzle part 300 includes a handle 310, a hose coupling bracket 320 and a nozzle 330.

More specifically, the handle 310 may have a ' 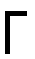 ' shape with an open lower side to allow a user to hold or unhold.

Additionally, the hose coupling bracket 320 is formed at one end connected to the second hose 220, and is attached and detached to/from the nozzle coupling bracket 211.

In this instance, the nozzle coupling bracket 211 and the hose coupling bracket 320 include a first rib 211a and a second rib 321 of an arc shape, respectively, as shown in of FIGS. 5A and 5B.

Accordingly, in the multipurpose dryer according to the present disclosure, a portion of the hose coupling bracket 320 may be inserted into the nozzle coupling bracket 211 and rotated at a predetermined angle to bring the first rib 211a and the second rib 321 into engagement, so the hose coupling bracket 320 may be fixed to the nozzle coupling bracket 211.

On the contrary, in the multipurpose dryer according to the present disclosure, the hose coupling bracket 320 may be rotated at the predetermined angle to alternate the first rib 211a and the second rib 321, and then the hose coupling bracket 320 may be separated from the nozzle coupling bracket 211.

In this instance, the attachment/detachment structure between the nozzle coupling bracket 211 and the hose coupling bracket 320 is not limited to the above-described structure and it is obvious that a variety of other structures may be applied. Additionally, the nozzle 330 is the last passage to a free space for hot or cold air generated by the blower means, and may be formed in various shapes according to the purpose of use.

Additionally, it is preferred that a plurality of nozzles 330 is formed in various shapes and can be changed according to the purpose of use.

Meanwhile, a method of using the multipurpose dryer according to the present disclosure as configured above will be described below.

To begin with, referring to FIG. 4A, in a state that the nozzle coupling bracket 211 is coupled to the hose coupling bracket 320, the user bends the first hose 210 to position the nozzle 330 toward an object to be dried.

Subsequently, the user sprays hot or cold air generated by the blower means to the object to be dried through the nozzle 330 by manipulating the manipulation panel 130 to perform a drying task.

In this instance, as shown in FIG. 3, in a state that the hose coupling bracket 320 is separated from the nozzle coupling bracket 211, the spray direction of the nozzle 330 may be adjusted by bending each of the first hose 210 and the second hose 220.

Additionally, as described above, as shown in FIG. 4A, when using in a state that the nozzle coupling bracket 211 is coupled to the hose coupling bracket 320, the user holds the handle 310, separates the hose coupling bracket 320 from the nozzle coupling bracket 211, pulls the second hose 220 so that the second hose 220 is exposed in the lengthwise direction of the first hose 210, and sprays cold or hot air to the object to be dried in different directions by freely adjusting the nozzle 330 to perform a drying task.

Accordingly, the multipurpose dryer according to the present disclosure allows free use of both hands during drying by adjusting the direction of the nozzle 330.

Additionally, in the multipurpose dryer according to the present disclosure, the nozzle 330 is freely extended and moved to a desired part of the object to be dried by separating the hose coupling bracket 320 from the nozzle coupling bracket 211 as necessary during drying, thereby easily performing a drying task on various parts of a moving object such as a pet.

While the present disclosure has been hereinabove described with reference to the accompanying drawings, the present disclosure is not limited to the embodiments disclosed herein and the accompanying drawings, and it is obvious that a variety of modification may be made thereto by those skilled in the art within the technical spirit and scope of the present disclosure.

Although the foregoing description of the embodiments of the present disclosure does not explicitly describe the effects of the configuration of the present disclosure, obviously the expected effects of the corresponding configuration should be acknowledged.

### [Detailed Description of Main Elements]

- 100:: Body part
- 110:: Suction port
- 120:: Power supply line
- 130:: Manipulation panel
- 140:: Nonslip pad
- 150:: Clamp
- 151:: Clamp bracket
- 200:: Hose part
- 210:: First hose
- 211:: Nozzle coupling bracket
- 211a:: First rib
- 220:: Second hose
- 300:: Nozzle part
- 310:: Handle
- 320:: Hose coupling bracket
- 321:: Second rib
- 330:: Nozzle

## Claims

1. A multipurpose dryer, comprising:
a body part including a blower means inside to suck outdoor air, heat or cool it and force the heated or cooled air, and a manipulation panel outside to control the blower means;
a hose part including a first hose capable of freely bending and maintaining a deformed shape with one end coupled to the body part and the other end formed as a free end, and a second hose capable of freely bending and positioned inside the first hose, with one end coupled to the blower means and the other end formed as a free end at the other end of the first hose; and
a nozzle part coupled to the other end of the second hose to spray the hot or cold air supplied from the blower means.

2. The multipurpose dryer according to claim 1, wherein a nozzle coupling bracket is formed at the other end of the first hose, and
the nozzle part includes a hose coupling bracket at one end and a nozzle at the other end to spray the hot or cold air supplied from the blower means, wherein the hose coupling bracket is attached and detached to/from the nozzle coupling bracket.

3. The multipurpose dryer according to claim 1, wherein the second hose is capable of maintaining a deformed shape.

4. The multipurpose dryer according to claim 1 or 3, wherein each of the first hose and the second hose is a compressible and stretchable corrugated tube, and
a maximum stretched length of the second hose is at least 1.5 times larger than a maximum stretched length of the first hose.

5. The multipurpose dryer according to claim 1, wherein the body has a suction port formed on any one side to feed the outdoor air toward the blower means, and
the suction port includes a detachable filter.
